# EUROPEAN PATENT SPECIFICATION

(11) **EP 3 265 270 B1**
(45) Date of publication and mention of the grant of the patent: **30.10.2019**
(21) Application number: 16717463.0
(22) Date of filing: 02.03.2016
(51) Int. Cl.: B23Q 1/03, B25B 11/00

(54) **APPARATUS FOR SUPPORTING A PIECE**
VORRICHTUNG ZUM STÜTZEN EINES TEILS
APPAREIL DE SUPPORT D'UNE PIÈCE

(30) Priority: 03.03.2015 IT MO20150043
(43) Date of publication of application: 10.01.2018
(73) Proprietor: C.M.S. S.p.A., 24019 Zogno (BG) (IT)
(72) Inventor: PESENTI, Gino, 24018 Villa D'Almè (BG) (IT); RINALDI, Nicola, 24125 Bergamo (IT)
(74) Representative: Villanova, Massimo
(86) International application number: PCT/IB2016/051149
(87) International publication number: WO 2016/139584

(56) References cited:
- EP-A1- 0 507 033
- WO-A1-2016/020723
- DE-A1- 19 621 658
- JP-A- H11 198 087
- JP-A- S62 113 660
- JP-U- S6 116 297

## Description

### Background of the invention

The invention relates to an apparatus according to the preamble of claim 1, for supporting a workpiece being machined, in particular a wide workpiece, with one dimension (thickness) that is significantly less than the other two dimensions (width and length), of non-flat shape, for example a panel of complex shape, like in particular, a panel with a double curvature.

Such an apparatus is known from DE 196 21 658 A1.

Specifically, but not exclusively, the apparatus in question can be usefully employed in the aerospace industry and/or in the automotive industry, in particular as part of a numerically controlled machining centre for machining workpieces made of various materials, aluminium, plastics, composite materials, etc.

In particular, reference is made to an apparatus for supporting a workpiece in a machining position, in which the apparatus comprises a plurality of orientable heads each arranged for engaging and supporting a portion of the workpiece.

Both international patent application PCT/IB2014/063743, and international patent application PCT/IB2014/062921, both belonging to the applicant of this application, show an apparatus of this type, in which each orientable gripping head is carried by the movable element of a vertical linear actuator and is operationally associated, during setting of the desired orientation, with a disk rotated by an electric motor.

Patent US 8,079,578 shows a supporting apparatus comprising various linear actuators that each carry a suction cup that is suitable for engaging and supporting at least one workpiece in a fixed machining position. Each suction cup can be oriented in space with at least two degrees of freedom. The suction cup is self-orienting in an idling manner, at the moment of loading the workpiece, through the effect of the weight and the rigidity of the workpiece, and, in the case of non-perfect self-orienting, through the action of the operator.

The prior art comprises also patent publication EP 0 507 033, which shows an apparatus for supporting and machining workpieces, in which the apparatus comprises vertically movable columns, each of which carries, on the upper end, a workpiece-fixing member.

It is desirable to adjust not only the orientation and the vertical position of the gripping heads, but also the horizontal position, so as to obtain an appropriate distribution of the heads, for example in function of the shape, stiffness and horizontal extent of the workpiece being machined. For example, it is desirable to avoid an excessive reciprocal distance between two gripping heads in order not to have a workpiece portion that is too extended between two adjacent resting zones, in particular in order to limit flexure deformation of the workpiece being machined. It is also desirable to adjust the reciprocal distance between two adjacent gripping heads so as to have a greater distance at a stiffer portion of the workpiece and vice versa a lesser distance at a more flexible portion.

### Background of the invention

One object of the invention is to make an apparatus for supporting a workpiece in machining position with a plurality of supporting heads in which each head is positionable so as to obtain a desired distribution of the heads. One object is to improve the apparatus for supporting a workpiece in machining position disclosed in international patent application PCT/IB2014/062921 or in international patent application PCT/IB2014/063743.

One advantage is to make available a constructionally simple and cheap for supporting a workpiece in the machining position. One advantage is to adjust the horizontal position of the heads and the reciprocal distance thereof by means of the same driving means used for adjusting the orientation in space of the heads, in particular the driving means used for adjusting the panning angle of the heads. One advantage is to support the workpiece by limiting the flexural deformation thereof by using a relatively small number of heads. One advantage is to position the heads simply and rapidly to arrange the heads at a greater reciprocal distance where the workpiece has greater stiffness and, vice versa, at a lesser reciprocal distance where the workpiece has less rigidity. One advantage is to provide an apparatus that is able to adapt appropriately to the dimensions and/or to the stiffness of the workpiece being machined. One advantage is to retain in position workpieces of complex shape, in particular panels with a double curvature. One advantage is to enable the workpiece to be positioned precisely and stably, avoiding at the same time deformation or other damage to the workpiece, also in the case of workpieces of large dimensions and/or of flexible workpieces. One advantage is to make available a supporting apparatus that is versatile and adaptable to use with workpieces of different shapes. One advantage is to provide a supporting apparatus with several gripping heads that are orientable in space to define, in a programmable manner, surfaces for engaging and supporting the workpiece of the desired shape, even if complex. One advantage is to make an apparatus for supporting a workpiece, of complex shape and/or of significant dimensions, in a desired machining position, in an extremely practical and labour-free manner, in particular without requiring the use of accessories, all the elements useful for engaging and supporting the workpiece being available on the apparatus. One advantage is to enable actuator means to be interchanged without the need to reprogram the instructions for positioning several movable supporting units.

Such objects and still others are all achieved by the apparatus according to one or more claims set out below.

In one embodiment, a supporting apparatus comprises a carriage that carries a linear actuator with a vertical axis, which in turn carries a head that is orientable in space to engage and support a portion of a workpiece being machined, in which the carriage further carries a second element that can rotate the head to adjust a panning angle of the head, the second element being integral with a solid surface that gives rise to action means that can engage selectively on a solid counter-surface that gives rise to reaction means outside the carriage, such that the carriage can be moved by rotating the action means engaged on the reaction means. In one embodiment, an apparatus comprises at least one supporting unit, which in turn comprises a carriage, a first element carried by the carriage, first actuator means arranged for moving the first element in a second direction F2, a gripping head carried by the first element, action means carried by the carriage with the possibility of being moved by second actuator means, in which the apparatus comprises reaction means outside the carriage, the action means and reaction means assuming respectively a disengaged configuration, in which they are not coupled together, and an engaged configuration, in which they are coupled together in such a manner that the second actuator means can move the carriage through the interaction between the action means and the reaction means. The action means may be movable integrally with the second element. The action means may comprise at least one solid surface that, in the engaged configuration, interacts in contact with the reaction means. The reaction means may comprise a solid counter-surface. The solid surface may be arranged on a rotatable element that, in the engaged configuration, can rotate coupled in contact with the solid counter-surface of the reaction means. The solid surface, in the engaged configuration, may be coupled with the reaction means by friction, in which case the solid surface comprises a friction surface, or by meshing, in which case the solid surface is on at least one gear member. The apparatus may comprise sensor means for detecting a position of the supporting unit along a first movement direction F1 of the carriage. The sensor means may comprise encoder means (for example of magnetic, mechanical, wire, optical or of yet any other type). The encoder means may be, in particular, of linear type. The encoder means may be at least partially integral with the reaction means. The encoder means may comprise a fixed encoder element extending in a direction longitudinal (parallel to the reaction means) parallel to a first movement direction F1 of the carriage. The apparatus may comprise third actuator means for commanding movements of the action means and/or of the reaction means between the engaged and disengaged configurations. The third actuator means may be carried by the carriage to move integrally the second element, the second actuator means and the action means. The third actuator means may comprise at least one linear actuator, in particular fluid-driven. The action means of two or more supporting units may be operationally associated with the reaction means. The carriages of two or more supporting units may be movable in the same first direction and/or may be coupled with the same guiding means.

In one embodiment, a method for using an apparatus according to any of the claims 1-14 comprises the steps of selecting the aforesaid engaged configuration and of driving the second actuator means to move the action means and consequently, through the effect of the interaction between the action means and the reaction means, move the carriage to adjust the position thereof, or select the disengaged configuration and drive the second actuator means to move the second element to adjust the orientation, in particular the panning angle, of the gripping head.

### Brief description of the drawings

The invention can be better understood and implemented with reference to the attached drawings that illustrate one embodiment thereof by way of non-limiting example.

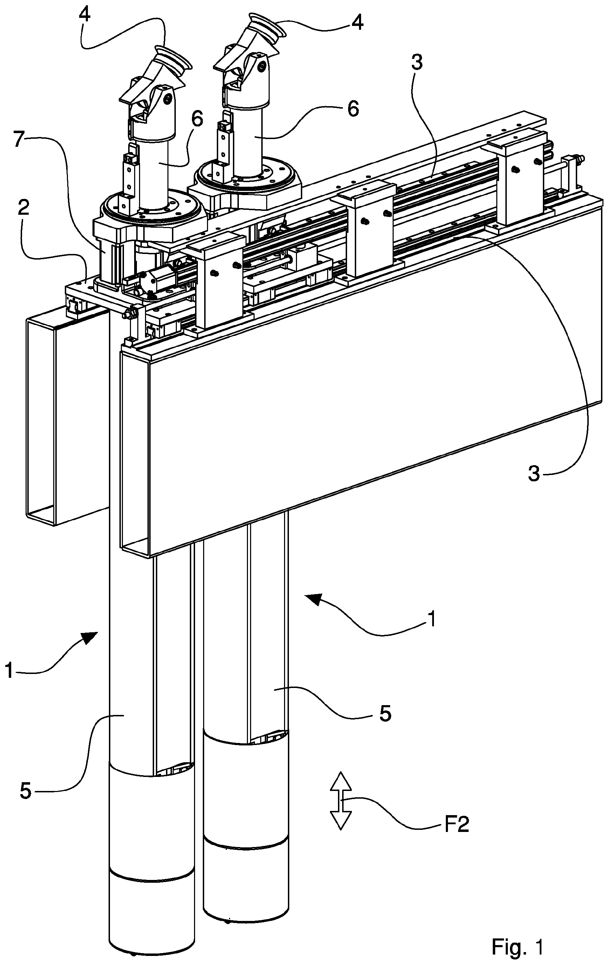

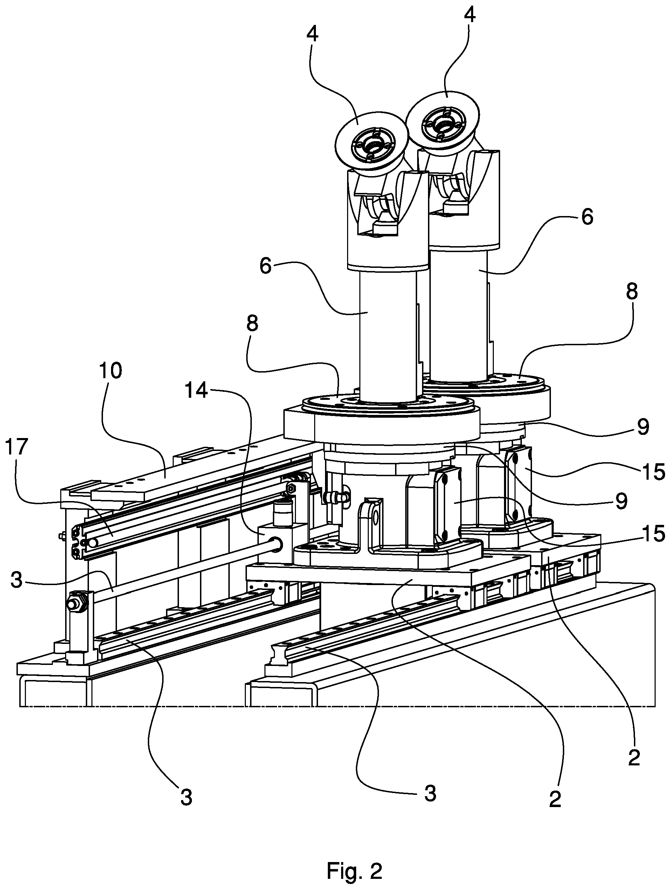

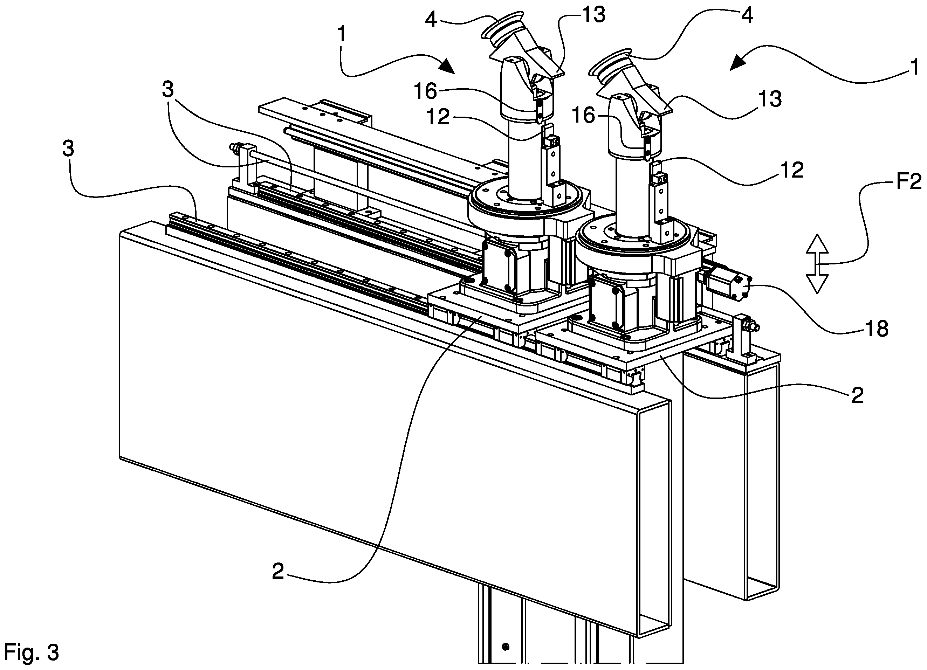

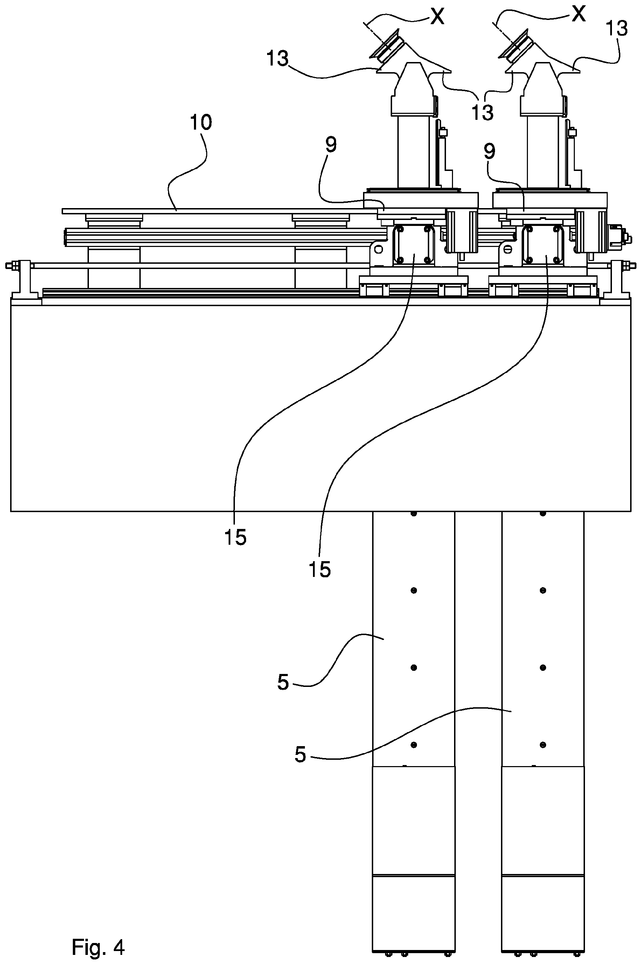

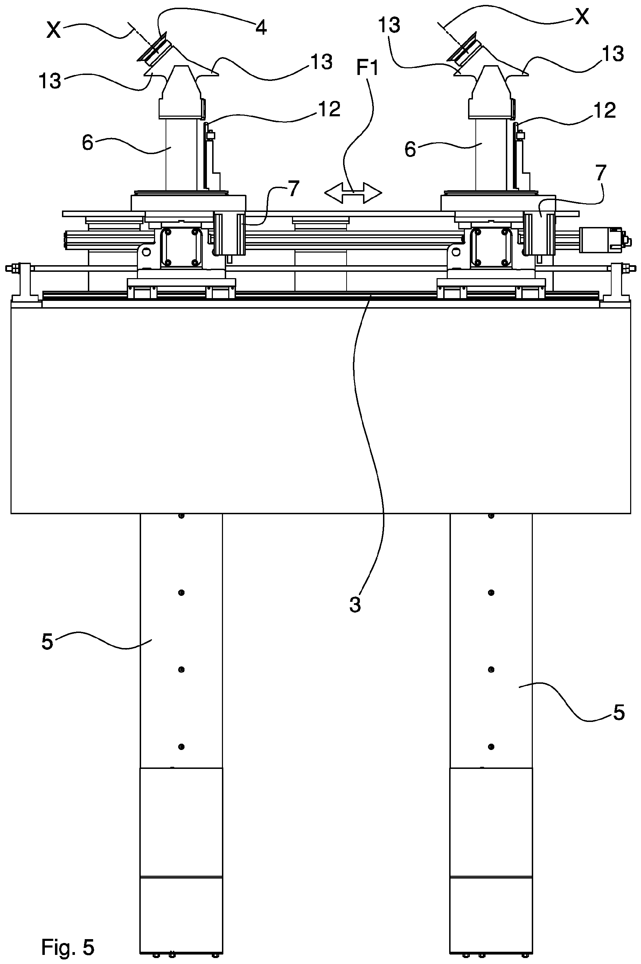

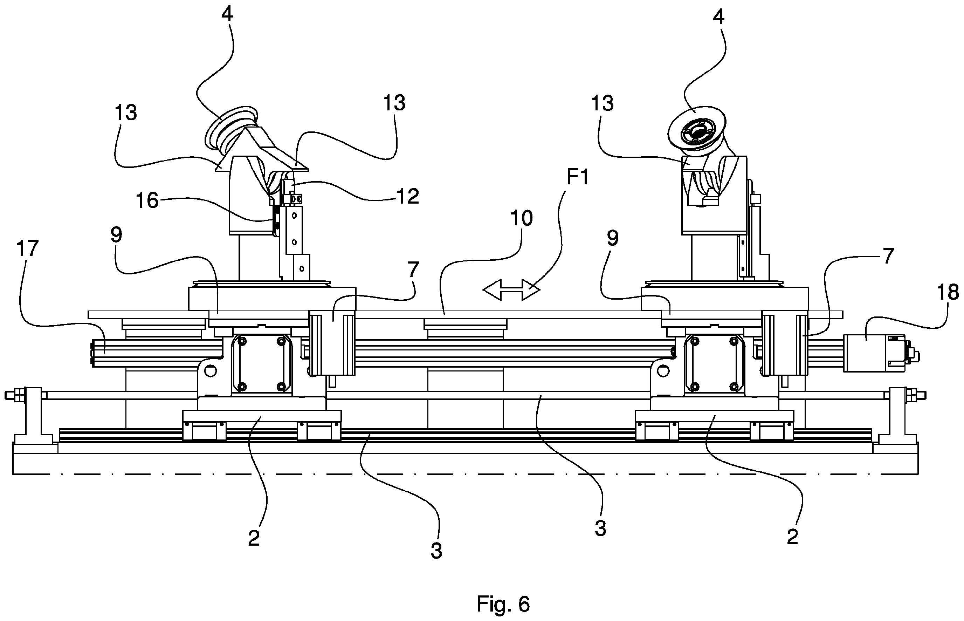

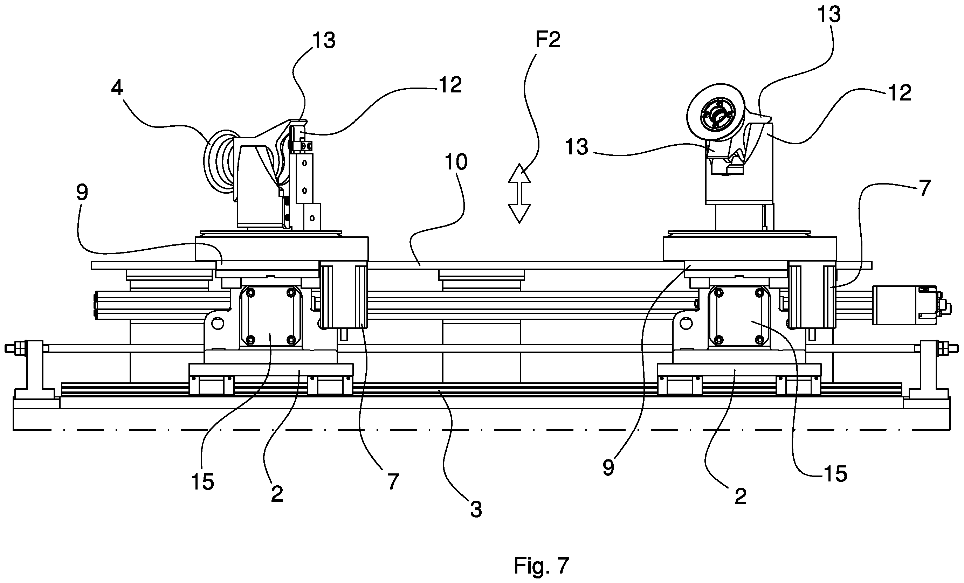

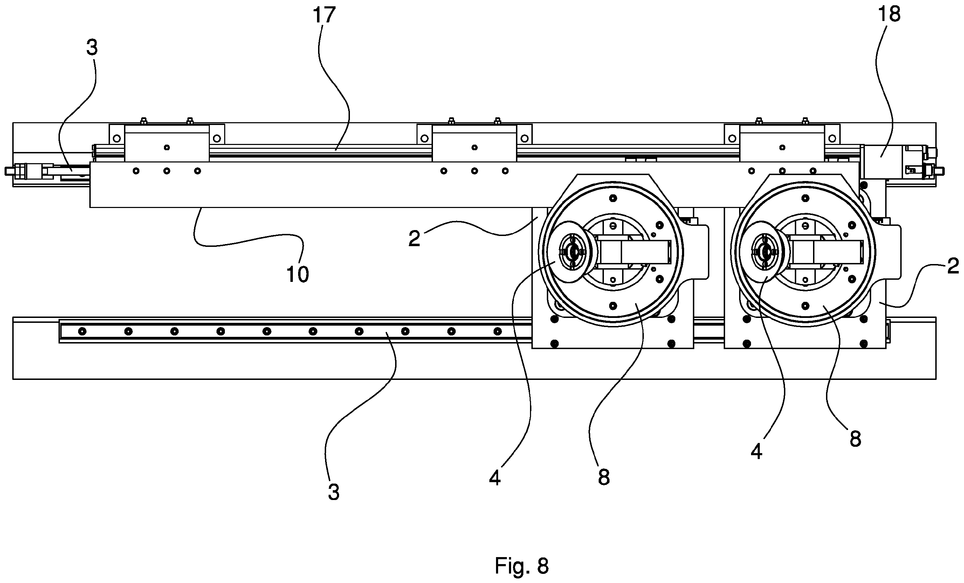

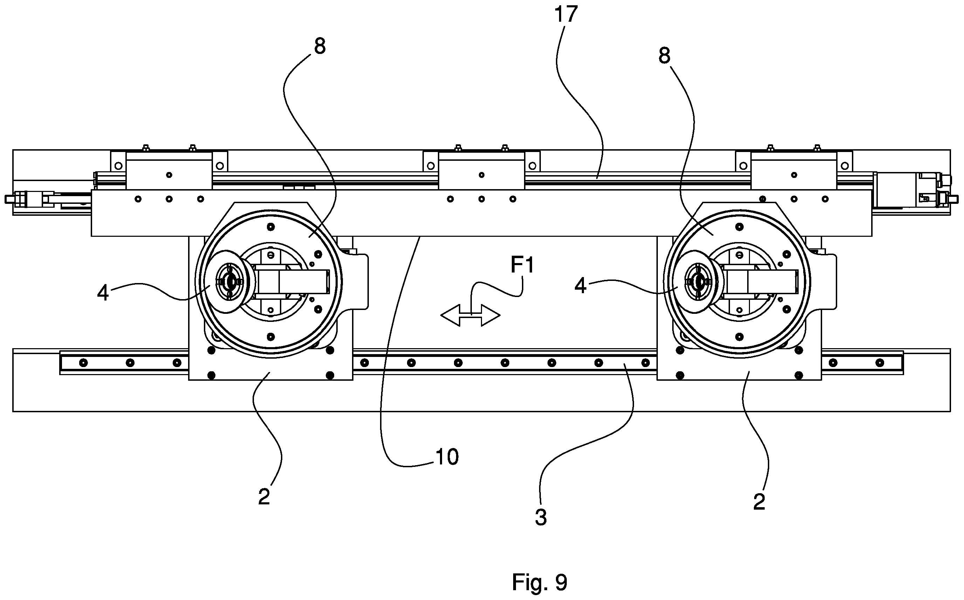

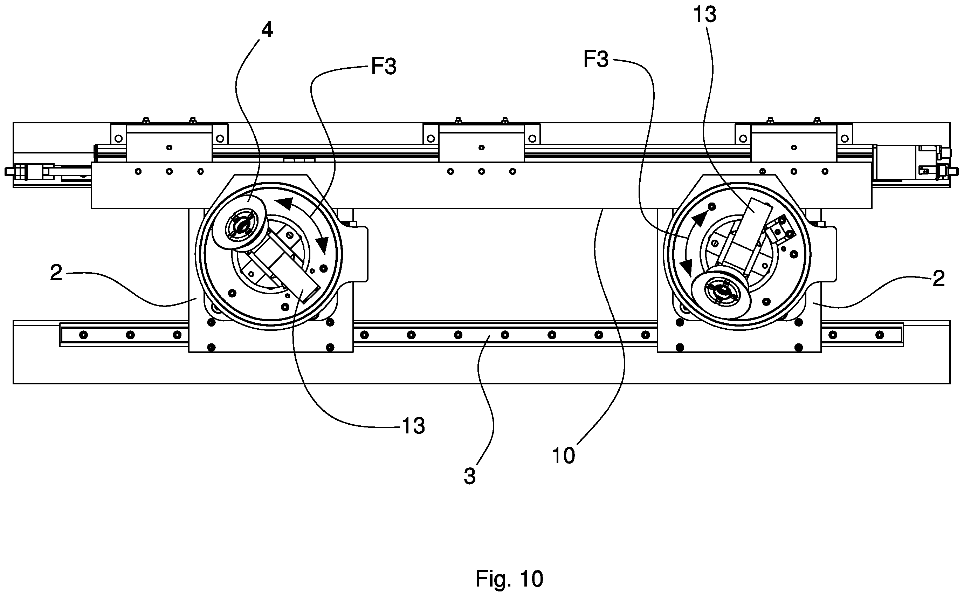

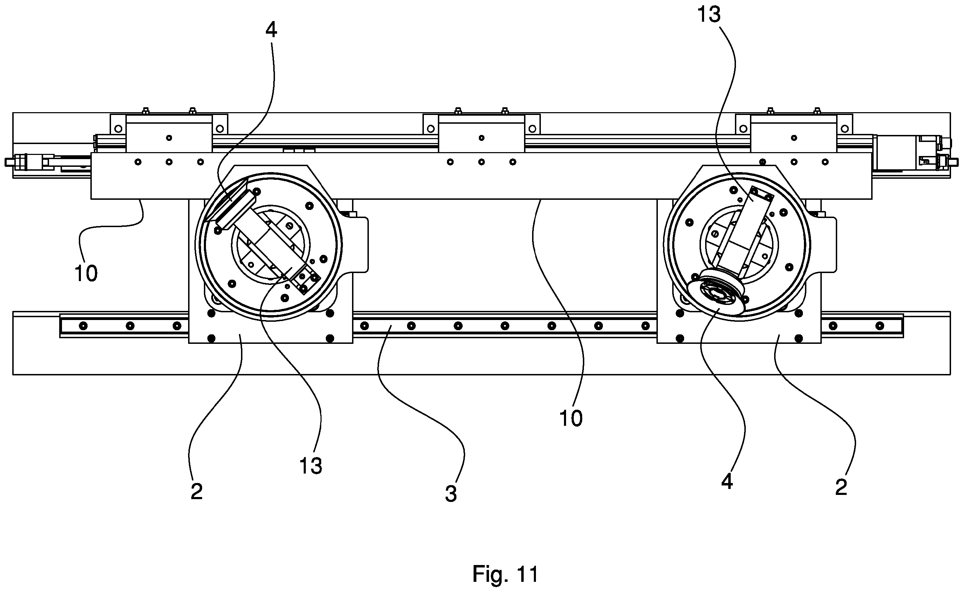

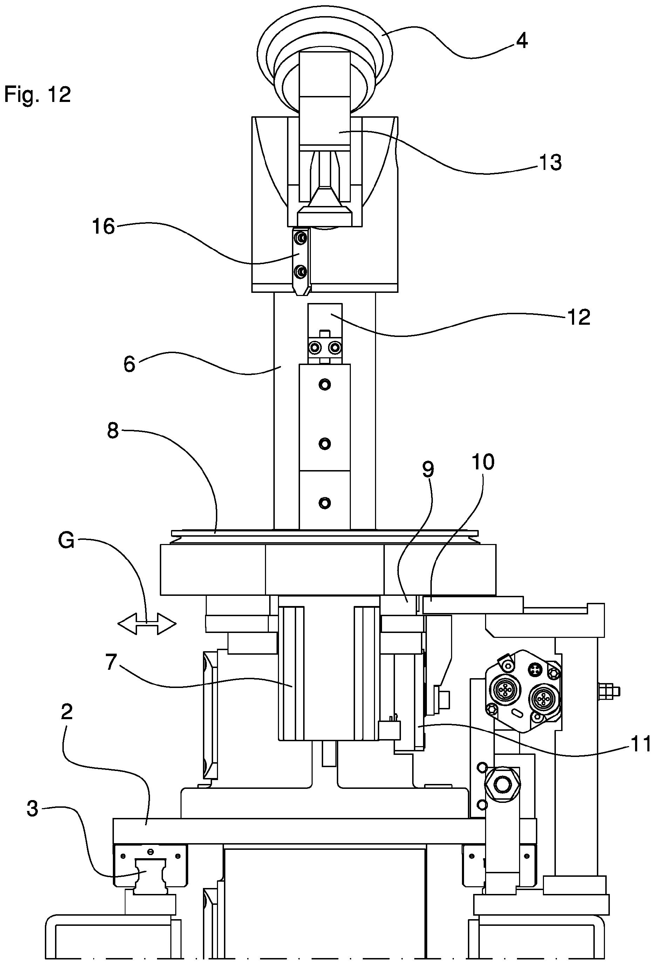

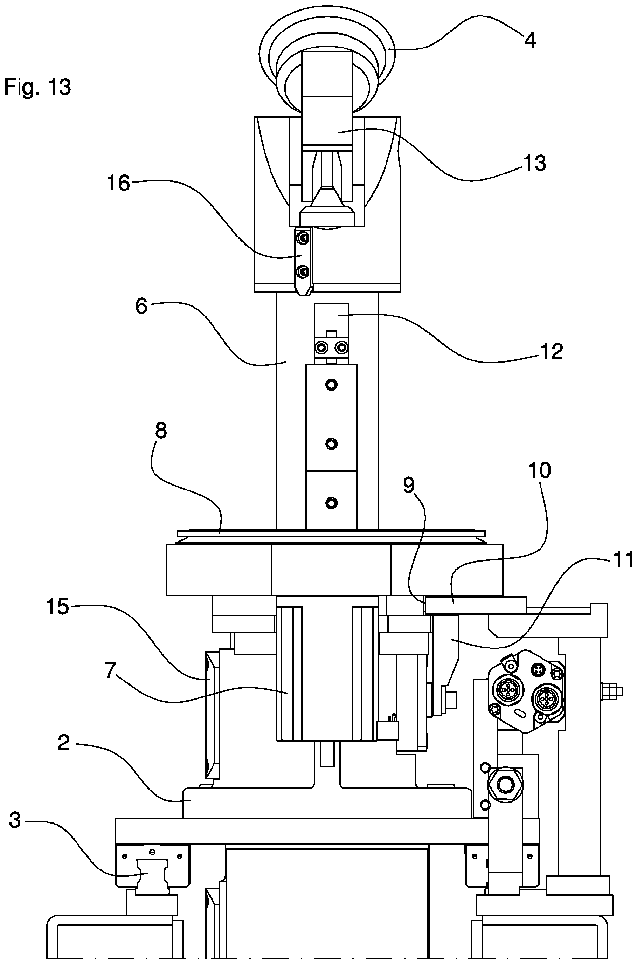

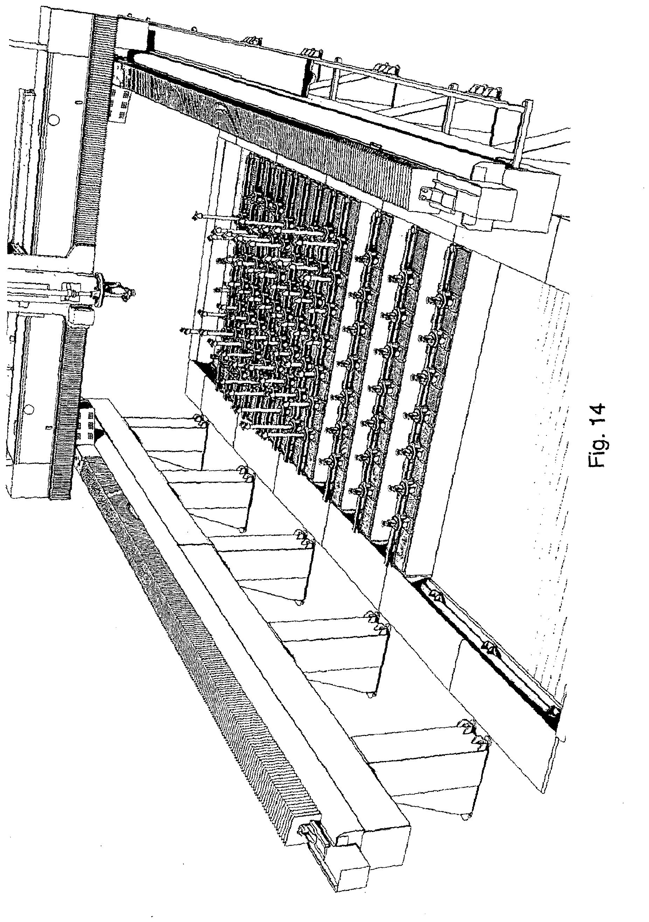

Figure 1 is a perspective view of a portion of an embodiment of a supporting apparatus made according to the invention. Figure 2 is a partial view of the portion of apparatus of figure 1 in another perspective. Figure 3 is a view of the portion of apparatus of figure 1 in still another perspective. Figure 4 is a side view in a vertical elevation of the portion of apparatus of figure 1 in a first operating configuration. Figure 5 is the view of figure 4 in a second operating configuration. Figure 6 is a partial view of an enlarged detail of figure 5 in a third operating configuration. Figure 7 is the view of figure 6 in a fourth operating configuration. Figures 8 to 11 are four top views, respectively, of figures 4 to 7 in the four different operating configurations. Figure 12 is a vertical raised view of a detail of the apparatus embodiment of the previous figures in a disengaged configuration in which the second actuator means does not move the carriage on the guides. Figure 13 is the view of figure 12 in an engaged configuration in which the second actuator means can move the carriage on the guides. Figure 14 is an overall view of a numerically controlled machining centre provided with a supporting apparatus made according to the invention.

### Detailed description

The embodiment disclosed here of the supporting apparatus according to the invention can be considered to be an improvement on the supporting apparatus disclosed in the international patent application PCT/IB2014/063 743. The supporting apparatus in question may be part of a numerically controlled machining centre, in particular for machining workpieces made of aluminium, plastics, composite materials, etc. In figure 14 there is shown an embodiment of a numerically controlled machining centre in which at least one workpiece being machined can be supported by a supporting apparatus made according to the invention.

The supporting apparatus in question may act, in particular, to support at least one workpiece in the machining centre. The machining centre may be suitable, for example, for machining wide workpieces, i.e. workpieces that have a dimension (thickness) that can be significantly less than the other two dimensions (width and length). The machining centre may be suitable for machining workpieces used in the aerospace industry and/or in the automotive industry. The machining centre may be provided with one or more operating units (of known type), each of which may be controlled on two or more machining axes. The machining centre may be configured, for example, to perform cutting and/or milling and/or drilling and/or contouring and/or welding and/or still other machining tasks. The machining centre, as said, may be provided with a supporting apparatus of a workpiece being machined. The supporting apparatus disclosed here is one apparatus embodiment made according to the present invention. The supporting apparatus may be particularly suitable for supporting workpieces of non-flat shape, for example panels of complex shape as, in particular, panels with a double curvature.

The supporting apparatus of the workpiece in the machining position comprises at least one supporting unit 1, in particular two or more supporting units 1. In the figures, for the sake of simplicity, only two supporting units 1 are illustrated, but it is also possible to arranged ten, or twenty or more supporting units 1, as in the embodiment illustrated in figure 14. The various supporting units 1 may cooperate together to engage and support the workpiece, overall, in a stable manner during the machining task/s. The various supporting unit 1 may be arranged, for example, according to one or more rows (parallel to one another). Each row may comprise two, three, four or more supporting units 1. In the specific embodiment two supporting units 1 of the same row are illustrated. The various supporting unit 1 of the apparatus may be, in particular, the same as one another. Each supporting unit 1 may be arranged on a movable carriage 2 in at least one first (horizontal) direction F1. It is possible that the carriages 2 of the supporting units 1 of the same row are coupled with the same guiding means 3 (sliding guides). It is possible to arrange, for example, two or more linear guiding means 3 that are parallel to one another, one for each row of supporting unit 1. Each supporting unit 1 may comprise at least one gripping head 4 arranged for engaging and supporting a portion of the workpiece. The head 4 may be, in particular, of the type with a vacuum grip, for example a head with a suction cup. The head 4 may be provided with means for generating a vacuum in the suction cup. Such means for generating the vacuum may be, for example, of a type that is substantially known and has therefore not been disclosed in detail. Such means for generating the vacuum may comprise, for example, conduit means for connecting the suction cup to sucking means (not illustrated). Each supporting unit 1 may comprise at least first actuator means 5 (carried by the respective carriage 2) arranged for driving at least one first element 6 that is movable in at least a second (vertical) direction F2. The movable first element 6 (piston) is coupled with a fixed part of the first actuator means 5. The first actuator means 5 may comprise, as in this embodiment, a linear actuator (with a vertical axis). The first actuator means 5 may be, for example, electrically driven. The first actuator means 5 may be driven, in particular, by a servomotor. It is nevertheless possible to provide for the first actuator means 5 being fluid-driven (pneumatic or hydraulic cylinder) or of still another type. Each carriage 2 may be provided, as in this embodiment, with at least one brake 14 (for example a pneumatically driven brake). As in this case, the brake 14 may operate on a (horizontal) bar of the guiding means 3. The first actuator means 5 may be provided, in particular, with at least one brake 15 (for example a pneumatically driven brake) that operates for locking in a desired position the first element 6.

Each gripping head 4 may be carried, in particular, by the corresponding first element 6 with the possibility of orientation in space. Each head 4 may have, in particular, the possibility of orientation with at least a first degree of freedom and/or at least a second degree of freedom in relation to the corresponding first element 6. In particular the head 4 may be coupled with the first element 6, as in this case, with a dual joint coupling (with two turning pairs). In particular, the head 4 may be carried by the first element 6 with the possibility of orientation in space (according to at least a first degree of freedom and/or at least a second degree of freedom) in an infinite number of orientation planes. It is possible to use other joining means with at least a first degree of freedom and/or at least a second degree of freedom (for example spherical articulated joint means). As also disclosed in application PCT/IB2014/063743, the head 4 of each supporting unit 1 may be moved by the corresponding first actuator means 5 with the possibility of reaching at least one machining zone, in which it can engage and support a portion of the workpiece, and at least one setting zone, in which the desired orientation of the head 4 in space can be set. The machining zone may be situated higher than the setting zone. Each supporting unit 1 may comprise at least the second actuator means 7 (carried by the respective carriage 2) arranged for driving at least one movable second element 8 (carried by the respective carriage 2) in at least one third (circumferal) direction F3 that is transverse to the aforesaid (axial) second direction F2.

The second element 8 may be, as in this case, rotatably coupled with the fixed part of the first actuator means 5 (by interposing means supporting rolling). The second actuator means 7 may be connected to the second element 8 by a mechanical connection (for example of gear type, as in this embodiment, or of the flexible member type, or of still another type). The second element 8 of each supporting unit 1 may be arranged, in particular, in the aforesaid (lower) setting zone. The second actuator means 7 may comprise, in particular, a motor (for example an electric motor, or motor of other type) provided with a rotor. The second element 8 may be, as in this case, rotatable around a rotation axis coinciding with a motion axis of the first element 6. The third direction F3 may be, as in this case, a circumferal direction arranged around the aforesaid rotation axis. The second element 8 may comprise, as in the specific case, a disc-shaped body that is coaxial with the axis of the first element 6.

Each supporting unit 1 may comprise action means 9 carried by the respective carriage 2 with the possibility of being moved by the second actuator means 7. The action means 9 is movable integrally with the second element 8.

The apparatus may comprise reaction means 10 outside the various conveying carriages 2 of the various supporting unit 1. The reaction means 10 may be operationally associable with the action means 9 of the various supporting unit 1 to perform, when coupled with the action means 9 and upon driving of the second actuator means 7, a force that is able to move the carriage 2 that carries the action means 9. The reaction means 10 may comprise, as in this embodiment, a (fixed) element extending in a longitudinal direction parallel to the first direction F1. The action means 9 and the reaction means 10 may selectively adopt an engaged configuration, in which they are coupled with one another and interact together such that the second actuator means 7, when moving the action means 9, can move the carriage 2 on the guiding means 3 by virtue of the contrasting force that is exerted between the action means 9 and the reaction means 10, and a disengaged configuration, in which they are not coupled with one another and do not thus interact with one another, so that the second actuator means 7 can move the action means 9 (and the second element 8 to adjust the orientation of the head 4) without moving the carriage 2. The action means 9 may comprise, as in this embodiment, at least a solid surface (for example of steel) that, in the engaged configuration, interacts in contact with the reaction means 10. The reaction means 10 may comprise, as in this embodiment, a solid counter-surface (for example of steel) that is couplable with the aforesaid solid surface. In particular the solid surface may be arranged on a rotatable element (integral with the second element 8) that, in the engaged configuration, can rotate coupled in contact with the solid counter-surface of the reaction means 10. The action means 9 (solid surface) in the engaged configuration may be coupled with the reaction means 10 by friction, as in the specific case illustrated here. In this case the solid surface may comprise a friction surface, just like the solid counter-surface (in a friction by steel on steel relation, as in this embodiment, or with other materials with a high friction coefficient).

In one embodiment that is not illustrated, the action means 9 (solid surface) in the engaged configuration may be coupled with the reaction means 10 by meshing. In this case the aforesaid solid surface may be arranged on at least one gear member (for example on a cog), just like solid counter-surface (for example on a rack).

The apparatus may comprise sensor means arranged for detecting a position of each supporting unit 1 in the first direction F1, in particular with respect to the reaction means 10 outside the carriage 2. This sensor means may comprise, as in this specific embodiment, encoder means, which may be, in particular, coupled with magnet means. The encoder means may be associated (integral) with the reaction means 10 and the magnet means may be associated (integral) with each supporting unit 1. The encoder means may comprise an encoder element 17 extending in length (parallel to the longitudinal element of the reaction means 10) parallel to the first direction F1. The encoder element 17 may be operationally associated with a magnet arranged on each carriage 2 so as to read the position and/or the movement of the corresponding carriage 2. The encoder means may comprise a process unit 18 connected to the encoder element 17 to process the received signals.

Each supporting unit 1 may comprise third actuator means 11 arranged for controlling the movements between the aforesaid engaged and disengaged configurations. The third actuator means 11 may be carried by the respective carriage 2 to move integrally the second element 8, the second actuator means 7 and the action means 9. The third actuator means 11 may comprise, as in this embodiment, at least one linear actuator, in particular a fluid-driven actuator (pneumatic cylinder). The third actuator means 11 may comprise a movable element arranged for adopting two (limit) positions that correspond to the aforesaid engaged and disengaged configurations. The (linear) movement of the movable element of the third actuator means 11 between the aforesaid two positions may comprise a (linear) stroke of reduced amount, for example of less than 10 cm, or less than 1 cm, or less than 1 mm. The third actuator means 11 is arranged so as to maintain the contact between the action means 9 and the reaction means 10 in the engaged configuration with sufficient force for the movement (rotation) of the action means 9 to cause the movement (sliding) of the carriage 2 on the guiding means 3. In the specific case the movement of the carriage 2 occurs through the rolling of the action means 9 on the reaction means 10. The reaction means 10 may be operationally associated, as in this case, in common with the action means 9 of two or more supporting units 1, in particular with the supporting unit 1 of the same row.

Each supporting unit 1 may comprise at least two connecting means arranged, in particular, on the second element 8 to connect together in a removable manner the gripping head 4 and the second element 8, so that the head 4 can be moved by the second actuator means 7 during setting of the desired orientation. The connecting means may comprise, in particular, at least one coupling member 12 associated with the second element 8 and couplable (by selectively bilateral contact in a circumferal direction) with at least one corresponding coupling counter-member 16 associated with the head 4. The coupling counter-member 16 may comprise, in particular, an element (key) that protrudes radially from the head 4 and is secured thereto. The (rotatable) movable second element 8 can drag with itself the head 4 in the aforesaid third direction F3 (circumferal in the one or opposite direction) when the aforesaid coupling counter-member 16, integral with the second element 8, is in lateral contact with the aforesaid coupling counter-member 16 (on a side of the coupling counter-member 16 or on the opposite side, depending on the rotation direction to give to the head 4), integral with the head 4. This contact occurs when the head 4 is in the setting zone (the zone where the orientation of the head occurs).

The connecting means may comprise, as in the specific case, a vertical protrusion (being an integral part of the coupling member 12, which moves the head 4 laterally in the third circumferal direction F3) arranged upwards to interact, in contact (vertical when the head 4 lowers), with one or more engaging portions 13 of the head 4. The head 4 may comprise, as in this embodiment, at least two distinct engaging portions 13 that are shaped and arranged to engage in contact with and disengage from the connecting means (vertical protrusion of the coupling member 12). As in this specific case, the two engaging portions 13 are arranged on two peripheral zones of the gripping head 4. The two aforesaid peripheral zones may be situated, in particular, in positions that are diametrically opposite one another with respect to a central zone of the head 4 at which the head 4 is coupled with the first element 6 (in particular the central zone is the zone where the head 4 is engaged at the dual joint coupling). The coupling member 12 may be carried by the second element 8 with the possibility of performing an orbital movement around the first element 6. The head 4 may be carried by the first element 6 with the possibility of performing at least one rotation movement (substantially coaxial with the aforesaid orbital movement) when the connecting means (in particular the coupling member and the coupling counter-member 12 and 16) connect the head 4 to the second element 8. The coupling counter-member 12 may be, in particular, movable (rotatable) on a transverse rotation plane, for example a plane that is perpendicular (horizontal), to a (vertical) linear movement axis of the first element 6.

The head 4 is disengaged from the coupling member 12 when the head is placed by the first actuator means 5 in the aforesaid (upper) machining zone. The head 4 may have, as in this embodiment, a workpiece gripping zone with a gripping axis X, the workpiece gripping zone facing the portion of the workpiece to be engaged, in which the gripping axis X is arranged obliquely to an extension direction of the head 4 that extends by joining the two aforesaid peripheral zones (having the engaging portions 13). In particular, the gripping axis X of the head 4 may form an angle of tilt, for example comprised between 0° and 90°, or between 15° and 75°, or between 30° and 60° (more in particular equal to about 45° ± 10°) with the aforesaid extension direction. In particular the gripping axis X of the head and the extension direction may be coplanar. The coupling member 12 or the connecting means (in particular the vertical protrusion) may also act as abutting member or means to enable the gripping head 4 to be orientated in the space on a vertical plane, i.e. to adjust a raising or elevation angle of the head 4, similarly to what is also disclosed in application PCT/IB2014/063743.

The aforesaid first actuator means 5 may be configured for moving the first element 6 (downwards) such as to carry, first, the head 4 into contact against (at least one upper point of) the abutting means (formed in this embodiment by at least one portion of the coupling member 12) and thus such as to modify the vertical orientation of the head (the elevation angle) through the effect of a further (downward) movement of the first element 6, whereas the head 4 (in particular a bottom surface of the head) is still in contact with (at least one upper point of) the abutting means. The contact between the (bottom surface of the) head 4 and the abutting means (formed by the upper portion of the coupling member 12) forces the head 4 to rotate around the coupling (i.e. owing to the second degree of freedom) modifying the tilt thereof, in particular the elevation angle. It is observed that the first element 6 may carry the gripping head 4 with the possibility of orientation of the head in a substantially idle or non-locked manner.

The panning angle is adjusted for the entire circumference (from 0° to 360°) by the interaction between the coupling member 12 and the coupling counter-member 16. This interaction comprises a bilateral contact, i.e. a contact selectively from one side or from the opposite side of the coupling counter-member 16. In particular, this interaction occurs when the member and the coupling counter-member 12 and 16 are alongside and adjacent to one another (at the same height). In the specific case, this interaction (lateral contact) may occur, in particular, when the aforesaid extension direction is horizontal (the two engaging portions 13 are at the same height) or at least near or around this configuration. Nevertheless, it is possible to provide for this interaction to be able to occur in other configurations. When the first element 6 has been taken to a suitable position for the member and the coupling counter-member 12 to 16 to be at the same height, a movement (rotation) of the second element 8 can permit a (lateral) contact of coupling member 12, which knocks against the coupling counter-member 16 to cause rotation of the head 4 and thus adjustment of the head 4 (adjustment by at least a first degree of freedom of the head 4). In order to contact the opposite side of the coupling counter-member 16 (to perform movements of the head 4 in the opposite rotation direction), the member 12 may substantially perform a rotation that is equal to almost a complete revolution.

It is first possible to adjust the panning angle and then the elevation angle, or vice versa. When both the angles have been adjusted, it is possible to lock the head 4 in position. Each supporting unit 1 may comprise brake means operationally associated with the respective head 4 to lock the latter in a desired orientation.

The apparatus may comprise control means that may comprise programmable electronic control means and computer program instructions that are suitable for driving the various actuator means 5, 7 and 11 and for receiving signals from the sensor means. This electronic control means is able to recognize the position of each unit 1 in the first direction F1, even if one or more of the elements carried by the carriage 2 are replaced, in particular if the second element 8 and/or the second actuator means 7 and/or the action means 9 are replaced.

It is possible to first position the supporting unit 1 in the first direction F1 (adjustment of the position of the carriage 2 on the guiding means 3), and then adjusting the orientation of the gripping head 4 (adjustment of the panning and elevation angles), or vice versa. In order to adjust the position of the supporting unit 1 in the first direction F1, it is possible to carry the action means 9 and reaction means 10 to the engaged configuration (figure 13), by driving the third actuator means 11. The movement between the engaged and disengaged configurations occurs in the direction indicated by the arrow G. In the engaged configuration, the second actuator means 7 is driven to rotate the action means 9, which is in contact with a high friction coefficient with the reaction means 10 (for example steel on steel contact). The force exerted between the action means 9 and reaction means 10 causes the carriage 2 to move on the guiding means 3. In the illustrated embodiment, the two supporting units 1 have been moved in the first direction F1 from the positions of figure 4 to those of figure 5. The (encoder) sensor means detects the position of the supporting unit 1 and enables the control means to carry the supporting unit 1 to the desired position, for example according to the dimensions and/or the stiffness of the workpiece.

To change the orientation of the head 4 it is possible to carry the action means 9 and reaction means 10 to the disengaged configuration (figure 12), in this embodiment with a movement of the action means 9 in the direction G (to the left in figure 12), by driving the third actuator means 11, in order to then operate in a manner that is similar to what has been disclosed in international patent application PCT/IB2014/063743 and as is again disclosed here below briefly. The brake means of the head 4 will be deactivated. One of the two engaging portions 13 will be coupled in contact with the connecting means (coupling member 12) which also acts as abutting means. In order to modify the vertical orientation of the head (elevation angle), the movable first element 6 can be lowered (or raised), such that the elevation angle of the head 4 can be varied by rotating around the axis that defines the second degree of freedom, through the effect of a movement performed by the first element 6 whilst the head is in contact against the abutting means. It is in particular possible to lower (or raise) the first element 6 until the extension direction is horizontal (intermediate positioning) and the members 12 and 16 of the connecting means are positionable at the same height; after which, in this intermediate positioning in which the engaging portions 13 are at the same height, it is possible to rotate the second element 8 to define the orientation of the head on a horizontal plane (figure 6), by adjusting the panning angle, by virtue of the coupling member 12 that is integral with the rotating second element 8 and which pushes laterally the coupling counter-member 16 (integral with the head 4) in the circumferal first direction F1; this rotation of the head 4 dragged by the coupling member 12 enables panning of the head to be adjusted, i.e. adjustment in a horizontal direction (adjustment of the "pan" or panning angle, or adjustment in the first degree of freedom), enabling the horizon to be oriented by a complete revolution. The further lowering (or raising) of the first element 6 may define, in particular, the final orientation of the head 4 on a vertical plane (movement from the positions of figure 6 to those of figure 7); so the rotation of the head around the abutting means enables the elevation or lift of the head 4 to be adjusted, i.e. the adjustment in a vertical direction (adjustment of the angle of "tilt" or elevation angle, or adjustment of at least a second degree of freedom), enabling the elevation orientation to be varied by about 90°. If, for example, the movable first element 6 continues to be lowered, it is possible to reach a configuration in which the gripping axis X has an almost horizontal tilt (figure 7, left head 4). This further lowering of the first element 6 in fact causes further rotation of the head 4 around the articulated joint (exploiting in particular the second degree of freedom), the head always abutting against the abutting means. As explained in application PCT/IB2014/063743, it is possible to adjust elevation orientation between 0° and 90° by choosing appropriately which of the two engaging portions 13 to couple with the coupling member 12, such as to rotate the head 4 correspondingly in one direction or the other.

As explained in application PCT/IB2014/063743, it is possible to stop the (lowering) movement of the first element 6 in a selected point, according to a preset program, so as to obtain the desired tilt, which is selectable from all the infinite possible tilts comprised between the two limit tilts (minimum and maximum) between 0° and 90°. It is thus possible to select the tilt of head 4 around a horizontal rotation axis (passing through the articulated joint), in a range comprised between 0° and 90°, through the control of the first actuator means 5.

It is further possible to select the orientations of the head around a vertical rotation axis (passing through the articulated joint) in a complete range between 0° and 360°, by control of the second actuator means 7. It has in fact been seen that the head 4 can be oriented further to make the member 12 of the connecting means make an orbital movement around the first element 6 whilst the member 12 pushes the coupling counter-member 16 laterally integrally with the head 4. This orbital movement, which is actuatable through the effect of the (rotation) movement of the second element 8, may be a complete 360° revolution. The member 12 of the connecting means is configured in such a manner as to drag the head 4 with itself in the orbital movement of the member 12 when the head is engaged with the member 12, with contact coupling of lateral thrust through the coupling counter-member 16. Once the desired orientation of the head 4, both around a rotation axis (horizontal, second degree of freedom) by the first actuator means 5 (adjustment of the elevation angle), is around a second rotation axis (vertical, first degree of freedom) by means of the second actuator means 7 (adjustment of the panning angle), brake means is activated, to lock the head 4 in the position with the desired orientation, and the first element 6 is raised, in the second direction F2, by the first actuator means 5, to carry the head to the (upper) machining position.

As said, it is possible to adjust first the panning angle (horizontal orientation of the "pan" angle) and then adjust the elevation or rise angle (vertical orientation of the tilt angle). Adjusting the panning and elevation angles, which defines the orientation of the head according to at least a first degree of freedom and/or at least a second degree of freedom, occurs in the setting zone. Subsequent positioning (lifting) the movable element in the second direction F2 towards the machining zone defines a third degree of freedom. Positioning the supporting unit 1 in the first direction F1 defines a fourth degree of freedom.

In the specific case disclosed above the connecting means between the head 4 and the second element 8 comprises bilateral contact means (interaction through thrust selectively on one side or on the opposite side), also it is possible to provide for the use of different connecting means, for example of the magnetic attraction type, or of the type with motor-driven hooking means or with wedging (fork) means, or of the type with clutch means, etc.), In the specific case, the head is rotated around a dual turning pair, although other types of kinematic pairs could be used with at least a first degree of freedom and/or at least a second degree of freedom (for example spherical pair).

## Claims

1. Apparatus for supporting a workpiece, said apparatus comprising one or more supporting units (1), each supporting unit comprising:
- a carriage (2) that is movable at least in one first direction (F1);
- a first element (6) carried by said carriage (2) and movable with respect to said carriage at least in one second direction (F2) that is transverse to said first direction (F1);
- first actuating means (5) carried by said carriage (2) and arranged for moving said first element (6) in said second direction (F2);
- a gripping head (4) carried by said first element (6) with the possibility of orientation in space and arranged for engaging and supporting at least one portion of the workpiece;
- a second element (8) carried by said carriage (2) and movable with respect to said carriage at least in one third direction (F3) that is transverse to said second direction (F2);
- second actuating means (7) carried by said carriage (2) and arranged for moving said second element (8) in said third direction (F3); and
- action means (9) carried by said carriage (2) with the possibility of being driven by said second actuating means (7);
**characterized in that**
said apparatus comprising reaction means (10) that is outside said carriage (2) and is operationally associable with said action means (9), said action means (9) and reaction means (10) selectively adopting an engaged configuration, wherein they are coupled with one another in such a manner that said second actuating means (7) can drive said action means (9) and consequently move said carriage (2) through the effect of the interaction between said action means (9) and said reaction means (10), and a disengaged configuration, in which they are not coupled with one another in such a manner that said second actuating means (7) can drive said action means (9) without moving said carriage (2).

2. Apparatus according to claim 1, wherein said action means (9) is movable together with said second element (8), said action means (9) comprising at least one solid surface that, in said engaged configuration, interacts in contact with said reaction means (10), said reaction means (10) comprising a solid counter-surface.

3. Apparatus according to claim **2,** wherein said solid surface is arranged on a rotatable element that, in said engaged configuration, can rotate coupled in contact with said solid counter-surface of said reaction means (10).

4. Apparatus according to claim 2 or 3, wherein said solid surface, in said engaged configuration, is coupled with said reaction means (10) by friction, in which case said solid surface comprises a friction surface, or by meshing, in which case said solid surface is on at least one gear member.

5. Apparatus according to any preceding claim, comprising sensor means for detecting a position of each supporting unit (1) along said first direction (F1), said sensor means comprising encoder means (17; 18).

6. Apparatus according to any preceding claim, wherein said reaction means (10) comprises a fixed element extending in a longitudinal direction parallel to said first direction (F1).

7. Apparatus according to any preceding claim, comprising third actuating means (11) for controlling movements of said action means (9) and/or of said reaction means (10) between said engaged and disengaged configurations.

8. Apparatus according to any preceding claim, wherein the action means (9) of two or more of said supporting units (1) is operationally associated with the same reaction means (10).

9. Apparatus according to any preceding claim, wherein the carriages (2) of two or more of said supporting units (1) are movable in the same first direction (F1) and are coupled with the same guiding means (3).

10. Apparatus according to any preceding claim, wherein said second element (8) interacts with said gripping head (4) to set a desired orientation of the head.

11. Apparatus according to any preceding claim, wherein said first element (6) is movable linearly according to a motion axis, said second direction (F2) coinciding with said motion axis.

12. Apparatus according to any preceding claim, wherein said second element (8) is rotatable around a rotation axis coinciding with the motion axis of said first element (6), said third direction (F3) being an orbital direction around said rotation axis.

13. Apparatus according to any preceding claim, wherein: said gripping head (4) is carried by said first element (6) with the possibility of orientation in space according to at least a first degree of freedom and/or a second degree of freedom; the movements in said second direction (F2) and in said third direction (F3) adjust, respectively, an elevation angle and a panning angle of said gripping head (4); said first actuating means (5) comprises a linear actuator and said second actuating means (7) comprises a rotor; said supporting unit (1) comprises connecting means (12; 16) arranged for removably connecting said gripping head (4) to said second element (8) so that said gripping head, when it is connected to said second element is moved together with said second element to adjust a panning angle of the head; said first element (6) carries said gripping head (4) with the possibility of orientation of said gripping head in a substantially idling or non-locked manner, each supporting unit (1) comprising brake means operationally associated with said gripping head (4) for locking the latter in a desired orientation; said connecting means comprises at least one coupling member (12) arranged on said second element (8) and couplable in contact with at least one corresponding coupling counter-member (16) arranged on said gripping head (4), thereby said second element (8) can drag said gripping head in said third direction (F3) when said coupling member and counter-member (12; 16) are coupled one to the other; said gripping head (4) is moved with the possibility of reaching at least one work zone, wherein it engages and supports a portion of the workpiece, and at least one setting zone, wherein a desired orientation of the gripping head (4) in space is set; said work zone is situated at a zone that is higher than said setting zone; said second element (8) is arranged in said setting zone, said gripping head (4) being moved by said second actuating means (7) during setting of the desired orientation; said connecting means (12; 16) are disengaged from one another when said head (4) is placed by said first actuating means (5) in said work zone; said gripping head (4) comprises at least one engaging portion (13) arranged for engaging with and disengaging from a coupling member (12) of said connecting means, and at least one other engaging portion (13), which is arranged for engaging with and disengaging from said coupling member (12), said engaging portions (13) being arranged on two peripheral zones of said gripping head (4), said two peripheral zones being diametrically opposite one another with respect to a central zone of said head at which said head (4) is coupled with said first element (6); said gripping head (4) has a gripping zone facing the portion of the workpiece and has a gripping axis (X) arranged obliquely to an extension direction of said gripping head that extends between said two peripheral zones.

14. Apparatus according to any preceding claim, wherein said at least one third direction (F3) beings circumferential and
- each supporting unit comprising at least one coupling member (12) arranged on said second element (8) and couplable in bilateral contact with at least one corresponding coupling counter-member (16) arranged on said gripping head (4), that is a contact which can be selectively on one side and on one opposite side of said coupling counter-member (16), thereby said coupling member can push against one side, or against one opposite side of said coupling counter-member (16) to move said gripping head in said third circumferential direction (F3) in one direction or in one opposite direction.

15. Method for using the apparatus according to any preceding claim, comprising the following steps: selecting said engaged configuration and driving said second actuating means (7) to move said action means (9) and consequently, through the effect of the interaction between said action means (9) and said reaction means (10), moving said carriage (2) to adjust the position thereof; or selecting said disengaged configuration and driving said second actuating means (7) to move said second element (8) to adjust the orientation, in particular a panning angle, of said gripping head (4).

## Patentansprüche

1. Vorrichtung zum Abstützen eines Werkstücks, wobei die Vorrichtung eine oder mehrere Stützeinheiten (1) aufweist, wobei jede Stützeinheit Folgendes aufweist:
- einen Schlitten (2), der wenigstens in einer ersten Richtung (F1) beweglich ist;
- ein erstes Element (6), das von dem Schlitten (2) getragen ist und in Bezug auf den Schlitten wenigstens in einer zweiten Richtung (F2) beweglich ist, die quer zu der ersten Richtung (F1) ist;
- ein erstes Betätigungsmittel (5), das von dem Schlitten (2) getragen ist und dazu angeordnet ist, das erste Element (6) in der zweiten Richtung (F2) zu bewegen;
- einen Greiferkopf (4), der von dem ersten Element (6) getragen ist, mit der Möglichkeit, sich im Raum zu orientieren, und der dazu angeordnet ist, an wenigstens einem Teil des Werkstücks anzugreifen und dies zu unterstützen;
- ein zweites Element (8), das von dem Schlitten (2) getragen ist und in Bezug auf den Schlitten wenigstens in einer dritten Richtung (F3) beweglich ist, die quer zu der zweiten Richtung (F2) ist;
- ein zweites Betätigungsmittel (7), das von dem Schlitten (2) getragen ist und angeordnet ist, um das zweite Element (8) in der dritten Richtung (F3) zu bewegen; und
- ein Betätigungsmittel (9), das von dem Schlitten (2) getragen ist, mit der Möglichkeit, von dem zweiten Betätigungsmittel (7) angetrieben zu werden; **dadurch gekennzeichnet, dass**
die Vorrichtung ein Reaktionsmittel (10) aufweist, das außerhalb des Schlittens (2) ist und arbeitsmäßig mit dem Aktionsmittel (9) verbindbar ist, wobei das Aktionsmittel (9) und das Reaktionsmittel (10) selektiv eine Eingriffskonfiguration einnehmen, in der sie miteinander auf eine solche Weise gekoppelt sind, dass das zweite Betätigungsmittel (7) das Aktionsmittel (9) antreiben kann und folglich den Schlitten (2) durch die Wirkung der Interaktion zwischen dem Aktionsmittel (9) und dem Reaktionsmittel (10) bewegen kann, und selektiv eine entkoppelte Konfiguration einnehmen, in der sie nicht miteinander auf eine solche Weise gekoppelt sind, dass das zweite Betätigungsmittel (7) das Aktionsmittel (9) antreiben kann, ohne den Wagen (2) zu bewegen.

2. Vorrichtung nach Anspruch 1, bei der das Aktionsmittel (9) zusammen mit dem zweiten Element (8) beweglich ist, wobei das Aktionsmittel (9) wenigstens eine feste Oberfläche aufweist, die in der Eingriffskonfiguration in Kontakt mit dem Reaktionsmittel (10) zusammenwirkt, wobei das Reaktionsmittel (10) eine feste Gegenfläche aufweist.

3. Vorrichtung nach Anspruch 2, bei der die feste Oberfläche auf einem drehbaren Element angeordnet ist, das sich in der Eingriffskonfiguration gekoppelt in Kontakt mit der festen Gegenfläche des Reaktionsmittels (10) drehen kann.

4. Vorrichtung nach Anspruch 2 oder 3, bei der die feste Oberfläche in der Eingriffskonfiguration mit dem Reaktionsmittel (10) durch Reibung gekoppelt ist, in welchem Fall die feste Oberfläche eine Reibungsfläche aufweist, oder durch Zahneingriff, in welchem Fall die feste Oberfläche an wenigstens einem Zahnradelement vorgesehen ist.

5. Vorrichtung nach irgendeinem vorhergehenden Anspruch, umfassend ein Sensormittel zum Detektieren einer Position von jeder Stützeinheit (1) entlang der ersten Richtung (F1), wobei das Sensormittel ein Encodermittel (17; 18) aufweist.

6. Vorrichtung nach irgendeinem vorhergehenden Anspruch, bei der das Reaktionsmittel (10) ein festes Element aufweist, das sich in einer Längsrichtung parallel zu der ersten Richtung (F1) erstreckt.

7. Vorrichtung nach irgendeinem vorhergehenden Anspruch, umfassend ein drittes Betätigungsmittel (11) zum Steuern von Bewegungen des Aktionsmittels (9) und/oder des Reaktionsmittels (10) zwischen der Eingriffskonfiguration und der gelösten Konfiguration.

8. Vorrichtung nach irgendeinem vorhergehenden Anspruch, bei der das Betätigungsmittel (9) von den beiden oder mehreren Stützeinheiten (1) arbeitsmäßig mit demselben Reaktionsmittel (10) zusammenhängt.

9. Vorrichtung nach irgendeinem vorhergehenden Anspruch, bei der die Schlitten (2) von den beiden oder mehreren Stützeinheiten (1) in derselben ersten Richtung (F1) beweglich sind und mit demselben Führungsmittel (3) gekoppelt sind.

10. Vorrichtung nach irgendeinem vorhergehenden Anspruch, bei dem das zweite Element (8) mit dem Greiferkopf (4) zusammenwirkt, um eine gewünschte Orientierung des Kopfes einzustellen.

11. Vorrichtung nach irgendeinem vorhergehenden Anspruch, bei der das erste Element (6) linear gemäß einer Bewegungsachse beweglich ist, wobei die zweite Richtung (F2) mit der Bewegungsachse zusammenfällt.

12. Vorrichtung nach irgendeinem vorhergehenden Anspruch, bei der das zweite Element (8) um eine Drehachse drehbar ist, die mit der Bewegungsachse des ersten Elementes (6) zusammenfällt, wobei die dritte Richtung (F3) eine orbitale Richtung um die Drehachse ist.

13. Vorrichtung nach irgendeinem vorhergehenden Anspruch, wobei: der Greiferkopf (4) von dem ersten Element (6) mit der Möglichkeit der Orientierung im Raum gemäß wenigstens einem Freiheitsgrad und/oder einem zweiten Freiheitsgrad getragen ist; die Bewegungen in der zweiten Richtung (F2) und in der dritten Richtung (F3) jeweils einen Höhenwinkel und einen Schwenkwinkel des Greiferkopfs (4) einstellen; wobei das erste Betätigungsmittel (5) einen linearen Aktuator aufweist und das zweite Betätigungsmittel (7) einen Rotor aufweist; wobei die Stützeinheit (1) ein Verbindungsmittel (12; 16) aufweist, das angeordnet ist, um den Greiferkopf (4) lösbar mit dem zweiten Element (8) zu verbinden, so dass der Greiferkopf (4), wenn er mit dem zweiten Element verbunden ist, zusammen mit dem zweiten Element bewegt wird, um einen Schwenkwinkel des Kopfes einzustellen; wobei das erste Element (6) den Greiferkopf (4) mit der Möglichkeit der Orientierung des Greiferkopfs in einer im Wesentlichen ruhenden oder nicht gekoppelten Weise trägt, wobei jedes Stützelement (1) ein Bremsmittel aufweist, das arbeitsmäßig mit dem Greiferkopf (4) gekoppelt ist, um den Letzteren in einer gewünschten Orientierung zu verriegeln; wobei das Verbindungsmittel wenigstens ein Kopplungselement (12) aufweist, das auf dem zweiten Element (8) angeordnet ist und in Kontakt mit wenigstens einem entsprechenden Gegenkopplungselement (16) koppelbar ist, das auf dem Greiferkopf (4) angeordnet ist, wodurch das zweite Element (8) den Greiferkopf in der dritten Richtung (F3) ziehen kann, wenn das Kopplungselement und das Gegenkopplungselement (12; 16) miteinander gekoppelt sind; wobei der Greiferkopf (4) mit der Möglichkeit des Erreichens von wenigstens einer Arbeitszone bewegt wird, in der er an einem Teil des Werkstücks angreift und dieses unterstützt, und wenigstens eine Einstellzone erreichen kann, in der eine gewünschte Orientierung des Greiferkopfs (4) im Raum eingestellt wird; wobei die Arbeitszone als eine Zone ausgebildet ist, die höher als die Einstellzone ist; wobei das zweite Element (8) in der Einstellzone angeordnet ist, wobei der Greiferkopf (4) durch das zweite Betätigungsmittel (7) während des Einstellens der gewünschten Orientierung bewegt wird; wobei die Verbindungsmittel (12; 16) voneinander gelöst werden, wenn der Kopf (4) durch das erste Betätigungsmittel (5) in der Arbeitszone platziert wird; wobei der Greiferkopf (4) wenigstens einen Eingriffsbereich (13) aufweist, der angeordnet ist, um an einem Kopplungselement der Verbindungsmittel anzugreifen und sich davon zu lösen, und wenigstens einen anderen Eingriffsbereich (13) aufweist, der angeordnet ist, um an dem Kopplungselement (12) anzugreifen und sich davon zu lösen, wobei die Eingriffsbereiche (13) an zwei Umfangszonen des Greiferkopfes (4) angeordnet sind, wobei die beiden Umfangszonen diametral einander in Bezug auf eine mittige Zone des Kopfes gegenüberliegen, an der der Kopf (4) mit dem ersten Element (6) gekoppelt ist; wobei der Greiferkopf (4) eine Greiferzone aufweist, die dem Teil des Werkstücks zugewandt ist und eine Greiferachse (X) aufweist, die schräg zu einer Ausdehnungsrichtung des Greiferkopfes angeordnet ist, die sich zwischen den beiden Umfangszonen erstreckt.

14. Vorrichtung nach irgendeinem vorhergehenden Anspruch, bei der die wenigstens eine dritte Richtung (F3) eine Umfangsrichtung ist;
- wenigstens eine Stützeinheit wenigstens ein Kopplungselement (12) aufweist, das auf dem zweiten Element (8) angeordnet ist und in gegenseitigem Kontakt mit wenigstens einem zugeordneten Gegenkopplungselement (16) koppelbar ist, das auf dem Greiferkopf (4) angeordnet ist, der ein Kontakt ist, der selektiv auf einer Seite und auf einer gegenüberliegenden Seite des Gegenkopplungselementes (16) sein kann, wodurch das Kopplungselement gegen eine Seite drücken kann oder gegen eine gegenüberliegende Seite des Gegenkopplungselementes (16), um den Greiferkopf in der dritten Umfangsrichtung (F3) in einer Richtung oder in einer gegenüberliegenden Richtung drücken kann.

15. Verfahren zur Verwendung der Vorrichtung gemäß irgendeinem vorhergehenden Anspruch, umfassend die folgenden Schritte: Auswählen der Eingriffskonfiguration und Antreiben des zweiten Betätigungsmittels (7), um das Betätigungsmittel (9) zu bewegen, und folglich, durch die Wirkung der Interaktion zwischen dem Betätigungsmittel (9) und dem Reaktionsmittel (10), den Schlitten (2) zu bewegen, um dessen Position einzustellen; oder Auswählen der gelösten Konfiguration und Antreiben des zweiten Betätigungsmittels (7), um das zweite Element (8) zu bewegen, um die Orientierung einzustellen, insbesondere einen Schwenkwinkel des Greiferkopfs (4).

## Revendications

1. Appareil pour supporter une pièce de travail, ledit appareil comprenant une ou plusieurs unités de support (1), chaque unité de support comprenant :
- un chariot (2) qui est mobile au moins dans une première direction (F1) ;
- un premier élément (6) porté par ledit chariot (2) et mobile par rapport audit chariot au moins dans une deuxième direction (F2) qui est transversale à ladite première direction (F1) ;
- des premiers moyens d'actionnement (5) portés par ledit chariot (2) et agencés pour déplacer ledit premier élément (6) dans ladite deuxième direction (F2) ;
- une tête de préhension (4) portée par ledit premier élément (6) avec la possibilité d'orientation dans l'espace et agencée pour venir en prise avec et supporter au moins une partie de la pièce de travail ;
- un second élément (8) porté par ledit chariot (2) et mobile par rapport audit chariot au moins dans une troisième direction (F3) qui est transversale à ladite deuxième direction (F2) ;
- des deuxièmes moyens d'actionnement (7) portés par ledit chariot (2) et agencés pour déplacer ledit second élément (8) dans ladite troisième direction (F3) ; et
- des moyens d'action (9) portés par ledit chariot (2) avec la possibilité d'être entraînés par lesdits deuxièmes moyens d'actionnement (7) ;
**caractérisé en ce que**
ledit appareil comprend des moyens de réaction (10) qui sont à l'extérieur dudit chariot (2) et peuvent être opérationnellement associés auxdits moyens d'action (9), lesdits moyens d'action (9) et moyens de réaction (10) adoptant sélectivement une configuration en prise, dans laquelle ils sont couplés les uns aux autres de telle manière que lesdits deuxièmes moyens d'actionnement (7) puissent entraîner lesdits moyens d'action (9) et par conséquent déplacer ledit chariot (2) par l'effet de l'interaction entre lesdits moyens d'action (9) et lesdits moyens de réaction (10), et une configuration désengagée, dans laquelle ils ne sont pas couplés les uns aux autres de telle manière que lesdits deuxièmes moyens d'actionnement (7) puissent entraîner lesdits moyens d'action (9) sans déplacer ledit chariot (2).

2. Appareil selon la revendication 1, dans lequel lesdits moyens d'action (9) sont mobiles en association avec ledit second élément (8), lesdits moyens d'action (9) comprenant au moins une surface solide qui, dans ladite configuration en prise, interagit en contact avec lesdits moyens de réaction (10), lesdits moyens de réaction (10) comprenant une contre-surface solide.

3. Appareil selon la revendication 2, dans lequel ladite surface solide est agencée sur un élément rotatif qui, dans ladite configuration en prise, peut tourner couplé en contact avec ladite contre-surface solide desdits moyens de réaction (10).

4. Appareil selon la revendication 2 ou 3, dans lequel ladite surface solide, dans ladite configuration en prise, est couplée auxdits moyens de réaction (10) par frottement, auquel cas ladite surface solide comprend une surface de frottement, ou par engrènement, auquel cas ladite surface solide est sur au moins un organe d'engrenage.

5. Appareil selon l'une quelconque des revendications précédentes, comprenant des moyens capteurs pour détecter une position de chaque unité de support (1) le long de ladite première direction (F1), lesdits moyens capteurs comprenant des moyens d'encodage (17 ; 18).

6. Appareil selon l'une quelconque des revendications précédentes, dans lequel lesdits moyens de réaction (10) comprennent un élément fixe s'étendant dans une direction longitudinale parallèle à ladite première direction (F1).

7. Appareil selon l'une quelconque des revendications précédentes, comprenant des troisièmes moyens d'actionnement (11) pour commander des mouvements desdits moyens d'action (9) et/ou desdits moyens de réaction (10) entre lesdites configurations en prise et désengagée.

8. Appareil selon l'une quelconque des revendications précédentes, dans lequel les moyens d'action (9) des deux ou plus de deux desdites unités de support (1) sont opérationnellement associés aux mêmes moyens de réaction (10).

9. Appareil selon l'une quelconque des revendications précédentes, dans lequel les chariots (2) de deux ou plus de deux desdites unités de support (1) sont mobiles dans la même première direction (F1) et sont couplés aux mêmes moyens de guidage (3).

10. Appareil selon l'une quelconque des revendications précédentes, dans lequel ledit second élément (8) interagit avec ladite tête de préhension (4) pour régler une orientation voulue de la tête.

11. Appareil selon l'une quelconque des revendications précédentes, dans lequel ledit premier élément (6) est mobile linéairement selon un axe de mouvement, ladite deuxième direction (F2) coïncidant avec ledit axe de mouvement.

12. Appareil selon l'une quelconque des revendications précédentes, dans lequel ledit second élément (8) peut tourner autour d'un axe de rotation coïncidant avec l'axe de mouvement dudit premier élément (6), ladite troisième direction (F3) étant une direction orbitale autour dudit axe de rotation.

13. Appareil selon l'une quelconque des revendications précédentes, dans lequel : ladite tête de préhension (4) est portée par ledit premier élément (6) avec la possibilité d'orientation dans l'espace selon au moins un premier degré de liberté et/ou un second degré de liberté ; les mouvements dans ladite deuxième direction (F2) et dans ladite troisième direction (F3) règlent, respectivement, un angle d'élévation et un angle de panoramique de ladite tête de préhension (4) ; lesdits premiers moyens d'actionnement (5) comprennent un actionneur linéaire et lesdits deuxièmes moyens d'actionnement (7) comprennent un rotor ; ladite unité de support (1) comprend des moyens de liaison (12 ; 16) agencés pour relier de manière amovible ladite tête de préhension (4) audit second élément (8) de sorte que ladite tête de préhension, lorsqu'elle est reliée audit second élément, est déplacée en association avec ledit second élément pour régler un angle de panoramique de la tête ; ledit premier élément (6) porte ladite tête de préhension (4) avec la possibilité d'orientation de ladite tête de préhension d'une manière sensiblement folle ou non bloquée, chaque unité de support (1) comprenant des moyens de freinage opérationnellement associés à ladite tête de préhension (4) pour bloquer cette dernière dans une orientation voulue ; lesdits moyens de liaison comprennent au moins un organe de couplage (12) agencé sur ledit second élément (8) et pouvant être couplé en contact avec au moins un contre-organe de couplage (16) correspondant agencé sur ladite tête de préhension (4), ainsi ledit second élément (8) peut tirer ladite tête de préhension dans ladite troisième direction (F3) lorsque lesdits organe et contre-organe de couplage (12 ; 16) sont couplés l'un à l'autre ; ladite tête de préhension (4) est déplacée avec la possibilité d'atteindre au moins une zone de travail, dans laquelle elle vient en prise avec et supporte une partie de la pièce de travail, et au moins une zone de réglage, dans laquelle une orientation voulue de la tête de préhension (4) dans l'espace est réglée ; ladite zone de travail est située sur une zone qui est plus haute que ladite zone de réglage ; ledit second élément (8) est agencé dans ladite zone de réglage, ladite tête de préhension (4) étant déplacée par lesdits deuxièmes moyens d'actionnement (7) pendant le réglage de l'orientation voulue ; lesdits moyens de liaison (12 ; 16) sont désengagés les uns des autres lorsque ladite tête (4) est placée par lesdits premiers moyens d'actionnement (5) dans ladite zone de travail ; ladite tête de préhension (4) comprend au moins une partie de prise (13) agencée pour venir en prise avec un organe de couplage (12) desdits moyens de liaison et être désengagée de celui-ci, et au moins une autre partie de prise (13), qui est agencée pour venir en prise avec ledit organe de couplage (12) et être désengagée de celui-ci, lesdites parties de prise (13) étant agencées sur deux zones périphériques de la ladite tête de préhension (4), lesdites deux zones périphériques étant diamétralement opposées l'une à l'autre par rapport à une zone centrale de ladite tête sur laquelle ladite tête (4) est couplée audit premier élément (6) ; ladite tête de préhension (4) a une zone de préhension dirigée vers la partie de la pièce de travail et a un axe de préhension (X) agencé en oblique par rapport à une direction d'extension de ladite tête de préhension qui s'étend entre lesdites deux zones périphériques.

14. Appareil selon l'une quelconque des revendications précédentes, dans lequel ladite au moins troisième direction (F3) est circonférentielle
- chaque unité de support comprenant au moins un organe de couplage (12) agencé sur ledit second élément (8) et pouvant être couplé en contact bilatéral avec au moins un contre-organe de couplage (16) correspondant agencé sur ladite tête de préhension (4), qui est un contact qui peut être sélectivement sur un côté et sur un côté opposé dudit contre-organe de couplage (16), ainsi ledit organe de couplage peut pousser contre un côté, ou contre un côté opposé dudit contre-organe de couplage (16) pour déplacer ladite tête de préhension dans ladite troisième direction circonférentielle (F3) dans une direction ou dans une direction opposée.

15. Procédé pour utiliser l'appareil selon l'une quelconque des revendications précédentes, comprenant les étapes suivantes : sélectionner ladite configuration en prise et entraîner lesdits deuxièmes moyens d'actionnement (7) pour déplacer lesdits moyens d'action (9) et par conséquent, par l'effet de l'interaction entre lesdits moyens d'action (9) et lesdits moyens de réaction (10), déplacer ledit chariot (2) pour régler la position de celui-ci ; ou sélectionner ladite configuration désengagée et entraîner lesdits deuxièmes moyens d'actionnement (7) pour déplacer ledit second élément (8) pour régler l'orientation, en particulier un angle de panoramique, de ladite tête de préhension (4).
